# EUROPEAN PATENT APPLICATION

(11) **EP 4 538 997 A1**
(43) Date of publication of application: **16.04.2025**
(21) Application number: 23881591.4
(22) Date of filing: 27.09.2023
(51) Int. Cl.: G06V 30/148

(54) **IMAGE-TEXT RECOGNITION METHOD, AND DATA PROCESSING METHOD FOR IMAGE-TEXT RECOGNITION MODEL**

(30) Priority: 26.10.2022 CN 202211318775
(71) Applicant: Alibaba Innovation Private Limited, Singapore 189554 (SG)
(72) Inventor: LIN, Junyang, Beijing 100102 (CN); YANG, An, Beijing 100102 (CN); WANG, Peng, Beijing 100102 (CN); ZHANG, Yichang, Beijing 100102 (CN); ZHOU, Chang, Beijing 100102 (CN)
(74) Representative: Novagraaf Technologies
(86) International application number: PCT/CN2023/122202
(87) International publication number: WO 2024/088012

(57) **Abstract**

Embodiments of the present disclosure provide a method for text and image recognition and a data processing method for a text and image recognition model. The method for text and image recognition includes that: a text and image recognition request input by a user is received; an image to be recognized is input into a text and image recognition model, and after processing the image to be recognized by the text and image recognition model, a Chinese text is acquired from the image to be recognized, where the text and image recognition model is obtained by training a pre-trained model based on Chinese text and image pairs from multiple different scenes, and the pre-trained model is pre-trained based on multiple pre-training images and description texts corresponding to the multiple pre-training images; the sample Chinese text is provided as feedback to the user. Since the pre-trained model is pre-trained based on multiple pre-training images and description texts corresponding to the multiple pre-training images, the pre-trained model possesses the capability of image description. Through training the pre-trained model using the Chinese text and image pairs from the multiple different scenes, the text and image recognition model can acquire the ability to recognize the Chinese text from the image, thereby enhancing the efficiency and accuracy of text and image recognition.

## Description

The present disclosure claims priority of Chinese Patent Application No. 202211318775.4, filed to China National Intellectual Property Administration on October 26, 2022 and titled "Method for Text and Image Recognition and Data Processing Method for Text and Image Recognition Model", the content of which is hereby incorporated by reference in its entirety.

### TECHNICAL FIELD

The present disclosure relates to the field of computer technology, and in particular, to a method for text and image recognition. At least some embodiments of the present disclosure further involves a data processing method for a text and image recognition model, a data processing apparatus for the text and image recognition model, an apparatus for text and image recognition, a computing device, a computer-readable storage medium, and a computer program.

### BACKGROUND OF THE INVENTION

With the development of Internet technology, Optical Character Recognition (OCR) technology has been widely applied in various scenarios, such as recognizing text content in documents and invoices. An effective improvement in OCR accuracy can help the user enhance project outcomes or increase the efficiency of related processes.

Currently, the OCR technology is primarily divided into two components: text detection and text recognition. The text detection has become relatively mature, whereas in terms of text recognition, compared with traditional document recognition, the accuracy rate still needs improvement in some complex scenarios due to factors such as image resolution and the diversity of text forms. Therefore, there is an urgent need for an efficient and accurate solution for text and image recognition.

### SUMMARY OF THE INVENTION

Embodiments of the present disclosure provide a method for text and image recognition. At least some embodiments of the present disclosure further involves a data processing method for a text and image recognition model, a data processing apparatus for a text and image recognition model, an apparatus for text and image recognition, a computing device, a computer-readable storage medium, and a computer program, to solve at least one technical problem mentioned above.

According to the first aspect of some embodiments of the present disclosure, a method for text and image recognition is provided, applied to a client-side device. The method includes that:
a text and image recognition request input by a user is received, where the text and image recognition request includes an image to be recognized; the image to be recognized is input into a text and image recognition model to acquire, after processing the image to be recognized by the text and image recognition model, a Chinese text from the image to be recognized,
where the text and image recognition model is obtained by training a pre-trained model based on Chinese text and image pairs from multiple different scenes, and the pre-trained model is pre-trained based on multiple pre-training images and description texts corresponding to the multiple pre-training images; the Chinese text is provided feedback to the user.

According to the second aspect of some embodiments of the present disclosure, a data processing method for a text and image recognition model is provided, applied to a cloud-side device. The method includes that: a sample set is acquired, where the sample set includes Chinese text and image pairs from multiple different scenes, and each Chinese text and image pair includes a sample image and a sample Chinese text; the sample image is input into a pre-trained model to acquire a predicted Chinese text for the sample image, where the pre-trained model is pre-trained based on multiple pre-training images and description texts corresponding to the multiple pre-training images; the pre-trained model is trained based on the predicted Chinese text and the sample Chinese text, and in response to meeting a third predetermined stopping condition, model parameters of a text and image recognition model is obtained; the model parameters of the text and image recognition model are sent to the client-side device.

According to the third aspect of some embodiments of the present disclosure, an apparatus for text and image recognition is provided, applied to a client-side device. The apparatus includes: a receiving module arranged for receiving a text and image recognition request input by the user, where the text and image recognition request includes an image to be recognized; a first acquiring module arranged for inputting the image to be recognized into the text and image recognition model to acquire Chinese text from the image to be recognized after processing by the text and image recognition model, where the text and image recognition model is obtained by training a pre-trained model based on Chinese text and image pairs from multiple different scenes, and the pre-trained model is pre-trained based on multiple pre-training images and description texts corresponding to the multiple pre-training images; a feedback module arranged for providing feedback to the user with the Chinese text.

According to the fourth aspect of some embodiments of the present disclosure, a data processing apparatus for a text and image recognition model is provided, applied to a cloud-side device. The apparatus includes: an acquisition module arranged for acquiring a sample set, where the sample set includes Chinese text and image pairs from multiple different scenes, and each of the multiple Chinese text and image pair includes a sample image and a sample Chinese text; a second acquiring module arranged for inputting the sample image into a pre-trained model to acquire a predicted Chinese text for the sample image, where the pre-trained model is pre-trained based on multiple pre-training images and description texts corresponding to the multiple pre-training images; a training module arranged for training the pre-trained model based on the predicted Chinese text and the sample Chinese text, and in response to meeting a third predetermined stopping condition, acquiring model parameters of a text and image recognition model; a sending module arranged for sending the model parameters of the text and image recognition model to the client-side device.

According to the fifth aspect of some embodiments of the present disclosure, a computing device is provided, including: a memory and a processor; the memory is arranged for storing computer-executable instructions, and the processor is arranged for executing the computer-executable instructions, where the computer-executable instructions, when executed by the processor, implement the steps of the method provided in the first or second aspect.

According to the sixth aspect of some embodiments of the present disclosure, a computer-readable storage medium is provided, storing computer-executable instructions, where the computer-executable instructions, when executed by a processor, implement the steps of the method provided in the first or second aspect.

According to the seventh aspect of some embodiments of the present disclosure, a computer program is provided, where when the computer program is executed in a computer, the computer program causes the computer to perform the steps of the method provided in the first or second aspect.

The above summary is for the purpose of illustration and does not intend to limit in any way. In addition to the illustrative aspects, embodiments, and features described above, further aspects, embodiments, and features of the present application will become apparent from the accompanying drawings and detailed description below.

### BRIEF DESCRIPTION OF DRAWINGS

In the accompanying drawings, unless otherwise specified, the same reference numerals throughout the drawings indicate the same or similar parts or elements. These drawings may not be drawn to scale. It should be understood that these drawings depict some embodiments of the implementations disclosed herein and should not be considered as limiting the scope of the present disclosure.
FIG.1 is a framework diagram of a data processing system for a text and image recognition model according to some embodiments of the present disclosure.
FIG.2 is another framework diagram of a data processing system for a text and image recognition model according to some embodiments of the present disclosure.
FIG.3 is a flowchart of a method for text and image recognition according to some embodiments of the present disclosure.
FIG.4 is an interface schematic diagram of a text and image recognition interface according to some embodiments of the present disclosure.
FIG.5 is a flowchart of a data processing method for a text and image recognition model applied to a cloud-side device according to some embodiments of the present disclosure.
FIG.6 is a flowchart of a method for text and image recognition according to some embodiments of the present disclosure.
FIG.7 is a flowchart of a data processing method for a text and image recognition model according to some embodiments of the present disclosure.
FIG.8 is a flowchart of a processing method for a method for text and image recognition according to some embodiments of the present disclosure.
FIG.9 is a structural schematic diagram of an apparatus for text and image recognition according to some embodiments of the present disclosure.
FIG. 10 is a structural schematic diagram of a data processing apparatus for a text and image recognition model according to some embodiments of the present disclosure.
FIG.11 is a structural block diagram of a computing device according to some embodiments of the present disclosure.

### DETAILED DESCRIPTION OF THE INVENTION

The following description contains many specific details to provide a thorough understanding of some embodiments of the present disclosure. However, some embodiments of the present disclosure can be implemented in many other ways not specifically described here without departing from the spirit of some embodiments of the present disclosure. Thus, some embodiments of the present disclosure are not limited to the specific implementations disclosed below.

Terms used in at least some embodiments of the present disclosure are intended for the purpose of describing particular embodiments and is not intended to limit some embodiments of the present disclosure. The singular forms "a", "an" and "the" used in some embodiments of the present disclosure and the appended claims are intended to include the plural forms as well, unless the context clearly indicates otherwise. It should further be understood that the term "and/or" as used herein refers to and encompasses any and all possible combinations of at least one of the associated listed items.

It should be understood that although the terms first, second, etc., may be used herein to describe various information, the information should not be limited to these terms. These terms are used for distinguishing one type of information from another. For example, without departing from the scope of some embodiments of the present disclosure, the first could further be referred to as the second, and similarly, the second could further be referred to as the first. Depending on the context, words such as "if" as used herein can be interpreted as "when" or "in response to determining".

First, terms involved in some embodiments of the present disclosure are interpreted as follows.

Text recognition refers to recognizing textual information contained in images with text, to evaluate the effectiveness of a model based on accuracy. In some embodiments of the present disclosure, text recognition can be further referred to as text and image recognition.

Large-scale multimodal pre-training refers to training based on large-scale weakly supervised text and image pair data, where the model is trained on large-scale data to achieve outstanding performance parameters that can be used for initializing the model for fine-tuning on the pre-trained model.

Multi-task training refers to unifying data from multiple tasks into a consistent form to allow the model to train simultaneously on data from various tasks.

With the development of Internet technology, Optical Character Recognition (OCR) technology has found wide application in various scenarios, such as recognizing text content in documents, invoices, handwritten text, street scene text, and so on. Effective improvements in OCR accuracy can help the user improve the outcomes of projects or enhance the efficiency of relevant processes.

At present, the OCR technology is mainly divided into two segments: text detection and text recognition. The text detection has become relatively mature, while in terms of text recognition, especially in complex scenarios like street scenes, internet images, and even handwritten text recognition, the accuracy of text recognition still is required to be improved due to factors such as image resolution and the diversity of text formats. Therefore, there is an urgent need for an efficient and accurate solution for text and image recognition.

In order to solve the aforementioned problem, embodiments of the present disclosure provide a method for text and image recognition, applied to a client-side device. This method includes that: a text and image recognition request input by a user is received, where the text and image recognition request includes an image to be recognized; the image to be recognized is input into a text and image recognition model to acquire, after processing the image to be recognized by the text and image recognition model, Chinese text from the image to be recognized, where the text and image recognition model is obtained by training a pre-trained model based on Chinese text and image pairs from multiple different scenes, and the pre-trained model is pre-trained based on multiple pre-training images and description texts corresponding to the multiple pre-training images; the Chinese text is provided feedback to the user. Since the pre-trained model is pre-trained based on multiple pre-training images and description texts corresponding to the multiple pre-training images, the pre-trained model possesses the capability of image description. Through training the pre-trained model using the Chinese text and image pairs from the multiple different scenes, the text and image recognition model can acquire the ability to recognize the Chinese text from the image, thereby enhancing the efficiency and accuracy of text and image recognition.

Some embodiments of the present disclosure provide a method for text and image recognition, and further involve a data processing method for a text and image recognition model, a data processing apparatus for a text and image recognition model, an apparatus for text and image recognition, a computing device, and a computer-readable storage medium, which will be explained in detail in the following embodiments.

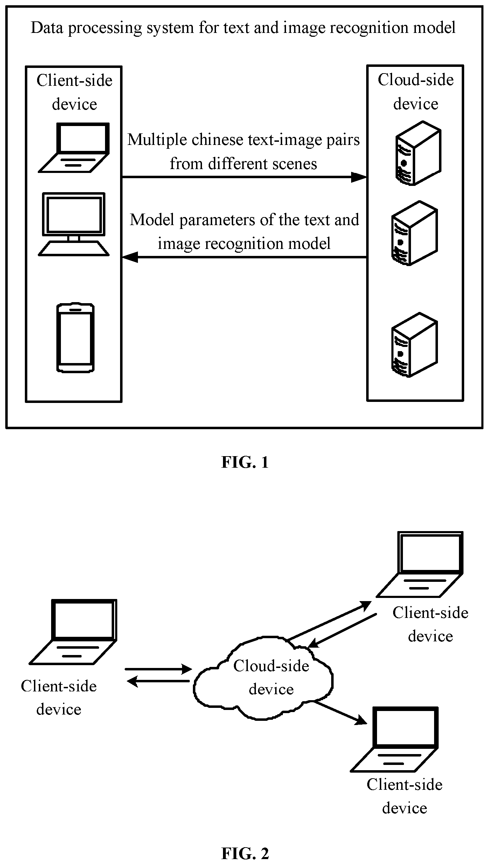

As shown in FIG. 1, FIG. 1 illustrates a framework diagram of a data processing system for a text and image recognition model according to some embodiments of the present disclosure. The data processing system for the text and image recognition model includes a cloud-side device and a client-side device. The client-side device is arranged for constructing a sample set and sending the sample set to the cloud-side device, where the sample set includes Chinese text and image pairs from multiple different scenes, and each Chinese text and image pair includes a sample image and a sample Chinese text. The cloud-side device is arranged for inputting the sample images into the pre-trained model to acquire a predicted Chinese text for the sample image, where the pre-trained model is obtained through pre-training using multiple pre-training images and descriptive texts corresponding to the multiple pre-training images. Based on the predicted Chinese text and the sample Chinese text, the cloud-side device trains the pre-trained model to acquire the model parameters of the text and image recognition model in response to meeting a third predefined stopping condition.

In some embodiments, the cloud-side device is further arranged for sending the model parameters of the text and image recognition model to the client-side device.

Through applying the solution of some embodiments of the present disclosure, the client-side device constructs the sample set and sends the sample set to the cloud-side device, where the sample set includes the Chinese text and image pairs from multiple different scenes, and each Chinese text and image pair includes the sample image and the sample Chinese text. The cloud-side device inputs the sample image into the pre-trained model to acquire the predicted Chinese text for the sample image, where the pre-trained model is obtained through pre-training using multiple pre-training images and descriptive texts corresponding to the multiple pre-training images. Based on the predicted Chinese text and the sample Chinese text, the cloud-side device trains the pre-trained model and obtains the model parameters of the text and image recognition model in response to meeting a third predefined stopping condition. The cloud-side device sends the model parameters of the text and image recognition model to the client-side device.

Since the pre-trained model is pre-trained based on multiple pre-training images and description texts corresponding to the multiple pre-training images, the pre-trained model possesses the capability of image description. Through training the pre-trained model using the Chinese text and image pairs from the multiple different scenes, the text and image recognition model can acquire the ability to recognize the Chinese text from the image and the client-side device can directly use the model parameters sent by the cloud-side device for text and image recognition, thereby enhancing the efficiency and accuracy of text and image recognition.

As shown in FIG.2, FIG.2 illustrates another framework diagram of a data processing system for a text and image recognition model according to some embodiments of the present disclosure. The system include a cloud-side device and multiple client-side devices. The multiple client-side devices establish communication connections through the cloud-side devices. In the scenario of data processing for the text and image recognition model, the cloud-side device provides data processing service for the text and image recognition model between the multiple client-side devices. The multiple client-side devices act as either senders or receivers, achieving real-time communication through the cloud-side device.

A user can interact with cloud-side device via a client-side device to receive data sent by other client-side devices or send data to other client-side devices. In the scenario of data processing for the text and image recognition model, the user can publish data streams through the client-side device to the cloud-side device. The cloud-side device then processes the data streams for the text and image recognition model and pushes the processed text and image recognition model to other client-side devices.

The client-side device is connected with the cloud-side device via a network, which provides medium for a communication link between the client-side device and the cloud-side device. The network includes various connection types, such as wired, wireless communication links, or fiber optic cables, etc. Data transmitted by the client-side device is required to process such as encoding, transcoding, compression, etc., before being published to cloud-side device.

The client-side device can be a browser, an application (APP), a web application such as a Hyper Text Markup Language5 (H5) application, a lightweight application (also known as a mini-program, which is a lightweight application), or a cloud application, etc. The client-side device can be developed based on a software development kit (SDK), such as the SDK for real-time communication (RTC), of service provided by the cloud-side device. The client-side device can be deployed on an electronic device and the running of the client-side device depends on the electronic device or a certain APP installed in the electronic device. The electronic device is equipped with a display to support information browsing. The electronic device includes a personal mobile terminal such as a smartphone, a tablet, a personal computer, etc. Other types of applications can further be arranged on electronic devices, such as a human-computer dialogue application, a model training application, a text processing application, a web browser application, a shopping application, a search application, an instant messaging tool, an email client, a social platform software, etc.

The cloud-side device includes a server that provides various services, such as a server that provides communication services for multiple client-side devices, a server that supports models used on the client-side device for backend training, or a server that processes data sent by the client-side device, etc. It should be noted that the cloud-side device can be implemented as a distributed server cluster or as a single server. The server can further be part of a distributed system, or the server can be a server with blockchain integration. The server can further be a cloud server that provides a basic cloud computing service such as a cloud service, a cloud database, cloud computing, a cloud function, cloud storage, a network service, a cloud communication, a middleware service, a domain name service, a content delivery network (CDN), as well as a big data and artificial intelligence platform, or the server can be an intelligent cloud server or a smart cloud host with Artificial Intelligence technology.

It should be noted that the data processing method for the text and image recognition model provided by some embodiments of the present disclosure can be executed by a cloud-side device. In other embodiments, the client-side device can also have similar functionalities to execute the data processing method for the text and image recognition model provided by some embodiments of the present disclosure. In yet other embodiments, the data processing method for the text and image recognition model provided by some embodiments of the present disclosure can be jointly executed by both the cloud-side device and the client-side device.

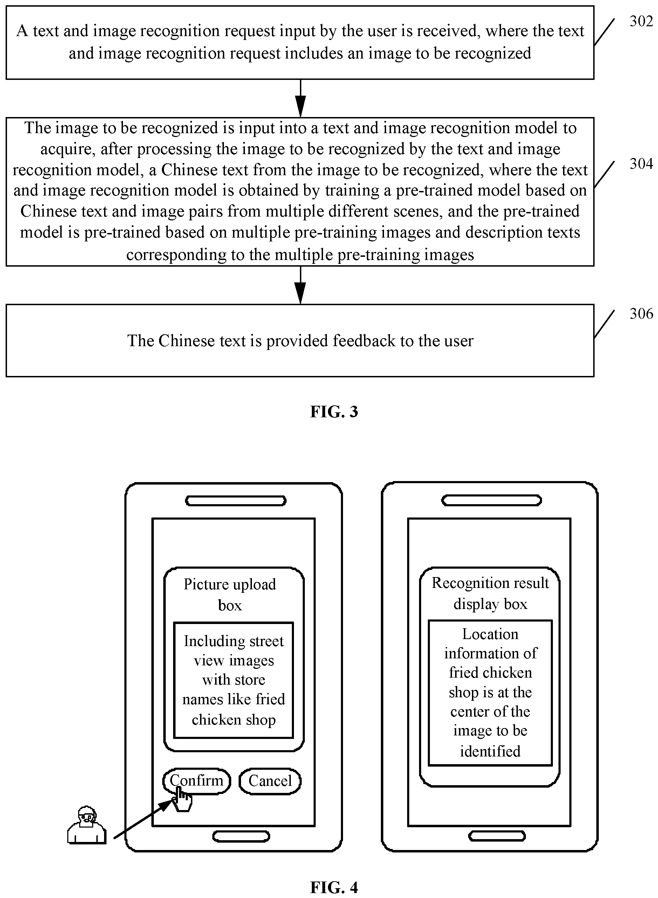

As shown in FIG.3, FIG.3 illustrates a flowchart of a method for text and image recognition according to some embodiments of the present disclosure. The method includes the following steps. At step 302, a text and image recognition request input by the user is received, where the text and image recognition request includes an image to be recognized.

In some embodiments of the present disclosure, a client-side device receives the text and image recognition request input by the user and processes the image to be recognized contained in the text and image recognition request to acquire a Chinese text from the image to be recognized.

In some embodiments, the image to be recognized refers to an image waiting for text and image recognition. The image to be recognized includes but is not limited to a street scene image, an internet image, a handwritten image, a document image, etc., which is specifically selected according to actual circumstances, with no restrictions imposed by some embodiments of the present disclosure.

In practical applications, the client-side device can directly acquire the image to be recognized from an image library, or the client-side device can receive the text and image recognition request input by the user.

It should be noted that there are various ways for the client-side device to receive the text and image recognition request input by the user, which are specifically chosen based on actual circumstances, with no restrictions imposed by some embodiments of the present disclosure.

In some embodiments of the present disclosure, the client-side device can receive the text and image recognition request actively input by the user, where the text and image recognition request includes the image to be recognized.

In some embodiments of the present disclosure, after acquiring the text and image recognition model, the client-side device sends an image acquisition instruction to the user to indicate that the training of the text and image recognition model is completed, so as to make the user input the text and image recognition request.

At step 304, the image to be recognized is input into a text and image recognition model to acquire, after processing the image to be recognized by the text and image recognition model, a Chinese text from the image to be recognized, where the text and image recognition model is obtained by training a pre-trained model based on Chinese text and image pairs from multiple different scenes, and the pre-trained model is pre-trained based on multiple pre-training images and description texts corresponding to the multiple pre-training images.

In some embodiments of the present disclosure, after the client-side device receives the text and image recognition request input by the user, the client-side device inputs the image to be recognized into the text and image recognition model to acquire, after processing the image to be recognized by the text and image recognition model, the Chinese text from the image to be recognized.

It should be noted that, in order to enable the text and image recognition model to recognize the image to be recognized more accurately, when the client-side device inputs the image to be recognized into the text and image recognition model, a preset prompt text is added, so that both the image to be recognized and the preset prompt text are input into the text and image recognition model, to acquire, after processing the image to be recognized and the preset prompt text by the text and image recognition model, the Chinese text from the image to be recognized.

In some embodiments, the preset prompt text is a preset text and image recognition prompt text, such as "What is the text in the image" or "What text does the image contain", which is specifically chosen according to actual circumstances, with no restrictions imposed by some embodiments of the present disclosure.

At step 306, the Chinese text is provided feedback to the user.

In some embodiments of the present disclosure, after receiving the text and image recognition request input by the user, the client-side device inputs the image to be recognized into the text and image recognition model to acquire, after processing the image to be recognized by the text and image recognition model, the Chinese text from the image to be recognized. And then the client-side device provides feedback to the user with the Chinese text.

It should be noted that the way for providing feedback to the user with the Chinese text includes displaying the Chinese text, or simultaneously displaying the image to be recognized and the Chinese text, which is specifically chosen according to actual circumstances, with no restrictions imposed by some embodiments of the present disclosure.

Through applying the solution of some embodiments of the present disclosure, the text and image recognition request input by the user is received; the image to be recognized is input into the text and image recognition model, and after processing the image to be recognized by the text and image recognition model, the Chinese text is acquired from the image to be recognized, where the text and image recognition model is obtained by training the pre-trained model based on the Chinese text and image pairs from multiple different scenes, and the pre-trained model is pre-trained based on the multiple pre-training images and description texts corresponding to the multiple pre-training images; the sample Chinese text is provided as feedback to the user. Since the pre-trained model is pre-trained based on the multiple pre-training images and the description texts corresponding to the multiple pre-training images, the pre-trained model possesses the capability of image description. Through training the pre-trained model using the Chinese text and image pairs from the multiple different scenes, the text and image recognition model can acquire the ability to recognize the Chinese text from the image, thereby enhancing the efficiency and accuracy of text and image recognition.

In some embodiments, a training process for the text and image recognition model includes the following steps. A sample set is acquired, where the sample set includes the Chinese text and image pairs from multiple different scenarios, each Chinese text and image pair including a sample image and a sample Chinese text. The sample image is input into the pre-trained model to acquire the predicted Chinese text for the sample image. The pre-trained model is trained based on the predicted Chinese text and the sample Chinese text to acquire the text and image recognition model.

In some embodiments of the present disclosure, in order to ensure that the text and image recognition model has the capability for text and image recognition, a large number of Chinese text and image pairs are used for training this model. When starting the model training, the sample set is acquired. In some embodiments, in order to make the text and image recognition model more universally applicable, a variety of Chinese text and image pairs from different scenarios are used for training this model.

In some embodiments, there are various images containing text, such as street scene images including store names, and internet images containing web text. Therefore, the Chinese text and image pairs from multiple different scenarios includes at least two of the following: street scene Chinese text and image pairs, internet image Chinese text and image pairs, document Chinese text and image pairs, and handwritten Chinese text and image pairs. The sample Chinese text refers to textual content corresponding to Chinese characters contained in the sample image.

In practical applications, there are various methods for acquiring the sample set, which are specifically chosen based on actual circumstances, with no restrictions imposed by some embodiments of the present disclosure. In some embodiments, the sample set is composed of a large number of Chinese text and image pairs from different scenarios manually input. In some embodiments of the present disclosure, the large number of Chinese text and image pairs from different scenarios are read from other data acquisition devices or databases to form the sample set.

In some embodiments, since the shapes of multiple sample images in the sample set vary widely and aspect ratios are uneven, directly converting the sample images into a uniform shape, such as a square, would cause serious distortion of the text in the sample images, thereby affecting the accuracy of text and image recognition. Therefore, based on size data of the sample images, while maintaining the aspect ratio of the sample images, the sample images are processed to acquire uniformly shaped processed sample images. That is, after acquiring the sample set, the method further includes the following steps. The size data of the sample images is acquired. The aspect ratio of the sample images are determined based on the size data of the sample images. The sample images are processed according to the aspect ratio of the sample images to acquire the processed sample images.

In some embodiments, the size data of the sample images can be specific size values, for example, a length of an image is 8cm and a width of this image is 6cm. The size data of the sample images can further be size data categorized by predefined size values. It is assumed that a length of the sample image is 8cm, a width of the sample image is 6cm, and the predefined size value is 2cm, then the length of the sample image is 4cm and the width of the sample image is 3cm. Of course, the size data of the sample images further includes pixel values.

In practical applications, there are various methods for acquiring the size data of the sample images, which are specifically chosen based on actual circumstances, with no restrictions imposed by some embodiments of the present disclosure. In some embodiments, the size data of the sample images is received as input from the user. In some embodiments of the present disclosure, a size measurement tool is used for measuring the sample images to acquire the size data of the sample images.

It should be noted that after acquiring the size data of the sample image, the aspect ratio of the sample image is determined based on the size data. When the length of the sample image is 8cm and the width of the sample image is 6cm, the aspect ratio of the sample image is 8cm:6cm = 4:3 and when the length of the sample image is 4cm and the width of the sample image is 3cm, the aspect ratio of the sample image is 4:3.

In some embodiments, after determining the aspect ratio of the sample image, there are various ways to process the sample image based on the aspect ratio to acquire the processed sample image, which are specifically chosen based on actual circumstances, with no restrictions imposed by some embodiments of the present disclosure.

Through applying the solution of some embodiments of the present disclosure, the size data of the sample image is acquired, the aspect ratio of the sample image is determined based on the size data of the sample image, and the sample image is processed to acquire the processed sample image based on the aspect ratio of the sample image, thereby ensuring that the text in the sample image remains undistorted while standardizing the size and shape of the sample image to enhance the robustness and accuracy of the model.

In some embodiments, an original aspect ratio of the sample image is retained, and the length of the sample image is converted to a preset resolution, and the width of the sample image is randomly adjusted according to the aspect ratio. The remaining parts are filled based on the edge pixel values to acquire the processed sample image. That is, an operation that the sample image is processed to acquire the processed sample image based on the aspect ratio of the sample image includes the following steps. The length of the sample image is converted based on a predetermined resolution to determine a converted length of the sample image. The width of the sample image is adjusted based on the aspect ratio and the converted length to determine a converted width of the sample image. Pixel values of the sample image are filled based on the converted length and the converted width to acquire the processed sample image.

In some embodiments of the present disclosure, after determining the converted length of the sample image and the converted width of the sample image, a preset dimension is acquired. The pixel values of the sample image are filled based on the converted length, the converted width and the preset dimension to acquire the processed sample image.

It should be noted that when filling the pixel values of the sample image, the pixel values can be randomly selected. In some embodiments, in order to make the processed sample image more realistic, edge pixel values of the sample image are identified, and the pixel values of the sample image are filled based on the edge pixel values, ensuring that the filled image does not have noticeable fill boundaries.

In some embodiments, it is assumed that the length of the sample image is 128 and the width of the sample image is 96, and a preset resolution of 68. Based on the length of the sample image and the width of the sample image, the aspect ratio is determined to be 128:96 = 4:3. The length of the sample image, namely 128, is converted to the preset resolution of 68 to determine the converted length of the sample image to be 68. Based on the aspect ratio of 4:3 and the converted length of 68, the converted width of the sample image is determined to be 51. After determining the converted length and the converted width, the preset dimension of 68*68 is obtained. Through comparing the converted length, the converted width and the preset dimension, it is determined that the converted width is required to be adjusted from 51 to 68. Therefore, the pixel values of the sample image are filled to acquire the processed sample image with the preset dimension of 68*68.

Through applying the solution of some embodiments of the present disclosure, the length of the sample image is converted to the preset resolution to determine the converted length of the sample image. Based on the aspect ratio and the converted length, the width of the sample image is adjusted to determine the converted width of the sample image. Based on the converted length and the converted width of the sample image, the pixel values are filled to acquire the processed sample image, so as to ensure that the text in the sample image remains undistorted while standardizing the size and shape of the sample image, thereby enhancing the robustness and accuracy of the model.

In some embodiments of the present disclosure, after acquiring the sample set, the sample image is input into the pre-trained model to acquire the predicted Chinese text for the sample image, where the pre-trained model is trained based on multiple pre-training images and descriptive texts corresponding to the multiple pre-training images.

In practical applications, there are various methods for inputting the sample image into the pre-trained model to acquire the predicted Chinese text for the sample image, which are specifically chosen based on actual circumstances, with no restrictions imposed by some embodiments of the present disclosure.

In some embodiments, the pre-trained model includes a feature extraction layer, an encoder, and a decoder. The sample image is directly input into the pre-trained model. The feature extraction layer of the pre-trained model extracts image features of the sample image. Then, the image features are input into the decoder of the pre-trained model, and after decoding by the decoder, the predicted Chinese text for the sample image is obtained.

In some embodiments of the present disclosure, the pre-trained model includes an encoder and a decoder. First, image features of the sample image are extracted, and then the image features are input into the pre-trained model, and the image features are processed by the encoder and decoder to acquire the predicted Chinese text for the sample image. That is, an operation of inputting the sample image into the pre-trained model to acquire the predicted Chinese text for the sample image includes the following steps. Image features of a first sample image are extracted, where the first sample image is any sample image of the multiple Chinese text and image pairs. The image features are input into the pre-trained model to acquire a first predicted Chinese text for the first sample image.

In some embodiments, when the client-side device inputs the sample image into the pre-trained model, the client-side device further inputs a preset prompt text. In other words, the client-side device inputs both the sample image and the preset prompt text into the pre-trained model to acquire the predicted Chinese text for the sample image.

In some embodiments, the sample image and the preset prompt text are directly input into the pre-trained model. The feature extraction layer of the pre-trained model extracts image features of the sample image and text features of the preset prompt text. After splicing the image features and text features, the spliced features are input into the decoder of the pre-trained model, and after decoding by the decoder, the predicted Chinese text for the sample image is obtained.

In some embodiments of the present disclosure, the pre-trained model includes an encoder and a decoder. First, the image features of the sample image and the text features of the preset prompt text can be extracted, and then the image features and the text features are input into the pre-trained model, processed by the encoder and decoder, to acquire the predicted Chinese text for the sample image.

Through applying the solution of some embodiments of the present disclosure, the image features of the first sample image are extracted, where the first sample image is any sample image of the multiple Chinese text and image pairs. The image features are input into the pre-trained model to acquire the first predicted Chinese text for the first sample image, thereby reducing data processing load of the pre-trained model and improving the efficiency of acquiring the text and image recognition model.

In some embodiments of the present disclosure, there are various methods for extracting the text features of the preset prompt text, which are specifically chosen based on actual circumstances, with no restrictions imposed by some embodiments of the present disclosure. In some embodiments, methods such as one-hot encoding, term frequency-inverse document frequency (TF-IDF), etc., can be used for extracting text features. In some embodiments, models such as Long Short-Term Memory (LSTM) recurrent neural networks, Bidirectional Encoder Representations from Transformers (BERT), etc., can be used for extracting text features.

It should be noted that there are various methods for extracting the image features of the sample image, which are specifically chosen based on actual circumstances, with no restrictions imposed by some embodiments of the present disclosure.

In some embodiments of the present disclosure, methods such as Discrete Fourier Transform, geometric parameter method, shape invariant moments method, and two-dimensional histogram projection method can be used for extracting image features.

In some embodiments, the two-dimensional histogram projection method involves acquiring the cumulative distribution of black pixels across rows and columns in the horizontal and vertical directions of the sample image. Projections are performed on the sample image in both the horizontal and vertical directions, followed by normalization of the black pixel values counted along the row and column directions, ultimately resulting in a feature vector.

In some embodiments of the present disclosure, a preset feature extraction model is utilized to extract image features from the sample image. In other words, an operation of extracting the image features from the first sample image include the following steps. The first sample image is input into the preset feature extraction model, and the first sample image is processed by the preset feature extraction model to determine the image features of the first sample image.

In some embodiments, the preset feature extraction model refers to a model with feature extraction capabilities, which includes but is not limited to Convolutional Neural Networks (CNN), Residual Neural Networks (ResNet), Vision Transformers (ViT), etc.

In some embodiments, taking the ViT model as an example, the first sample image is divided into patches. For instance, the first sample image is divided into 9 patches. The size of each patch is specified, such as 16x16, etc. Each patch is input into an embedding layer (Linear Projection of Flattened Patches) to acquire a series of vectors (tokens), with 9 vectors corresponding to the 9 patches. A classification token, whose dimension matches the other 9 vectors, is then added before all the vectors. Additionally, positional information ranging from 0 to 9 is appended. All the vectors (patches) are then input into the encoder (Transformer Encoder). The output of the encoder is repeatedly stacked L times, and the output of the classification token is fed into a Multilayer Perceptron Head (MLP Head), to acquire the image features.

Through applying the solution of some embodiments of the present disclosure, the first sample image is input into the preset feature extraction model, and the first sample image is processed by the preset feature extraction model to determine the image features of the first sample image. Utilizing the preset feature extraction model to extract image features from the sample image improves the efficiency of feature extraction and the accuracy of the image features.

In some embodiments, an operation of training the pre-trained model based on the predicted Chinese text and the sample Chinese text to acquire the text and image recognition model includes the following steps. The predicted Chinese text is compared with the sample Chinese text to calculate the text loss value. The model parameters of the pre-trained model is adjusted based on the text loss value, and return to the step of inputting the sample image into the pre-trained model to acquire the predicted Chinese text for the sample image until the first preset stopping condition is met to obtain the text and image recognition model.

In some embodiments of the present disclosure, the first training stop condition includes the text loss value being less than or equal to a first preset threshold. After inputting the sample image into the pre-trained model to acquire the predicted Chinese text for the sample image, the predicted Chinese text is compared with the sample Chinese text to calculate the text loss value and compare the text loss value with the first preset threshold.

In some embodiments, in response to the text loss value being greater than the first preset threshold, it indicates that a significant difference between the predicted Chinese text and the sample Chinese text. In other words, the prediction capability of the pre-trained model is poor. At this point, the model parameters of the pre-trained model are adjusted based on the text loss value, and the process returns to the step of inputting the sample image into the pre-trained model to acquire the predicted Chinese text for the sample image. When the text loss value is less than or equal to the first preset threshold, it is indicated that a small difference between the predicted Chinese text and the sample Chinese text, and in response to meeting the first training stop condition, and the trained text and image recognition model is obtained.

In some embodiments of the present disclosure, besides comparing the text loss value with the first preset threshold, the number of iterations can further be considered to determine whether the current pre-trained model has been fully trained.

In some embodiments, when the text loss value is greater than the first preset threshold, the model parameters of the pre-trained model are adjusted, and the process returns to the step of inputting the sample image into the pre-trained model to acquire the predicted Chinese text for the sample image, continuing to train the pre-trained model. The training of the pre-trained model stops in response to reaching the first preset number of iterations, to obtain the trained text and image recognition model. The specific number of the first preset iterations is chosen based on actual circumstances, with no restrictions imposed by some embodiments of the present disclosure.

In practical applications, there are many functions for calculating the text loss value, such as cross-entropy loss function, L1 norm loss function, maximum loss function, mean squared error loss function, log loss function, etc., which are specifically chosen based on actual circumstances, with no restrictions imposed by some embodiments of the present disclosure.

Through applying the solution of some embodiments of the present disclosure, the predicted Chinese text is compared with the sample Chinese text to calculate the text loss value. Based on the text loss value, the model parameters of the pre-trained model are adjusted, and the process returns to the step of inputting the sample image into the pre-trained model to acquire the predicted Chinese text for the sample image. **In** response to meeting the first preset stopping condition, the text and image recognition model is obtained. Continuously adjusting the model parameters of the pre-trained model ensures that the final obtained text and image recognition model is more accurate.

**In** some embodiments, after acquiring the text and image recognition model, it can be directly evaluated for multiple downstream tasks. **In** some embodiments, the text and image recognition model can be fine-tuned using Chinese text and image pairs from a specified scenario to achieve better performance in that scenario. That is, after training the pre-trained model based on the predicted Chinese text and the sample Chinese text to acquire the text and image recognition model, the method further includes the following steps. A training instruction sent by the user is received, where the training instruction includes a designated scene. Multiple Chinese text and image pairs are acquired from the designated scene. The text and image recognition model is trained using the multiple Chinese text and image pairs from the designated scene to acquire a text and image recognition model for the designated scene.

In practical applications, there are various methods for receiving training instructions sent by users, which are specifically chosen based on actual circumstances, with no restrictions imposed by some embodiments of the present disclosure.

In some embodiments, after acquiring the text and image recognition model, if the user is required to retrain the model, the user can directly send a training instruction including a specified scenario, which can include but is not limited to a street scene, an internet image, a handwritten text, a document, etc.

In some embodiments of the present disclosure, after acquiring the text and image recognition model, a query instruction is sent to the user, which includes multiple scenarios to allow the user to decide whether to retrain the text and image recognition model based on a specified scenario. When the user is required to retrain the text and image recognition model, the user selects the specified scenario. In some embodiments, the way of selecting, by the user, scenarios includes clicking, double-clicking, touching, hovering with a mouse, swiping, long pressing, voice control, shaking, or any other way, which are specifically chosen based on actual circumstances, with no restrictions imposed by some embodiments of the present disclosure.

It should be noted that a user who sends the training instruction and a user who inputs the text and image recognition request can be the same or different. Upon receiving the training instruction sent by the user, multiple Chinese text and image pairs from the specified scenario can be acquired. The way for acquiring the Chinese text and image pairs from the specified scenario can involve filtering the Chinese text and image pairs from the sample set, or re-acquiring Chinese text and image pairs of the specified type. The specific way for acquiring the multiple Chinese text and image pairs from the specified scenario is chosen based on actual circumstances, with no restrictions imposed by some embodiments of the present disclosure.

In some embodiments, the way for using the multiple Chinese text and image pairs from the specified scenario to train the text and image recognition model to acquire an text and image recognition model for the specified scenario is the same as the way for training the pre-trained model to acquire the text and image recognition model, so it will not be repeated here in some embodiments of the present disclosure.

Through applying the solution of some embodiments of the present disclosure, the training instruction including a specified scenario is received from the user. The multiple Chinese text and image pairs from the specified scenario are acquired. The text and image recognition model is trained using the multiple Chinese text and image pairs from the specified scenario to acquire the text and image recognition model for the specified scenario, which leads to better performance of the text and image recognition model in the specified scenario, improving the accuracy of text and image recognition in the specified scenario.

In some embodiments, a training process for the pre-trained model includes the following steps. A training set is acquired, where the training set includes multiple pre-training text and image pairs, and each pre-training text and image pair includes a pre-training image and a description text corresponding to the pre-training image. A first pre-training text and image pair is extracted from the multiple pre-training text and image pairs, where the first pre-training text and image pair is any one of the multiple pre-training text and image pairs. A first pre-training image from the first pre-training text and image pair is input into an initial model to acquire a first predicted text for the first pre-training image. A first predicted text is compared with the first description text from the first pre-training text and image pair to calculate a pre-training loss value. Model parameters of the initial model is adjusted based on the pre-training loss value, and returning to a step of extracting the first pre-training text and image pair from the multiple pre-training text and image pairs until a second predetermined stopping condition is met to acquire the pre-trained model.

It should be noted that there are various methods for acquiring the training set, which are specifically chosen based on actual circumstances, with no restrictions imposed by some embodiments of the present disclosure. **In** some embodiments of the present disclosure, a large number of pre-training text and image pairs can be manually input to form a second sample set. In some embodiments of the present disclosure, a large number of pre-training text and image pairs can be read from other data acquisition devices or databases to form the training set. In some embodiments, the pre-training text and image pairs include but are not limited to product images and titles corresponding to the product images, landscape images and descriptions corresponding to the landscape images, etc.

In some embodiments of the present disclosure, the second training stop condition includes the pre-training loss value being less than or equal to a second preset threshold. After inputting the first pre-training image from the first pre-training text and image pair into the initial model to acquire the first predicted text for the first pre-training image, and comparing the first predicted text with the first descriptive text from the first pre-training text and image pair to calculate the pre-training loss value, the pre-training loss value can be compared with the second preset threshold.

In some embodiments, when the pre-training loss value is greater than the second preset threshold, it indicates that a significant difference between the first predicted text and the first descriptive text from the first pre-training text and image pair. In other words, the recognition ability of the initial model is poor. At this point, the model parameters of the initial model are adjusted based on the pre-training loss value, and the process returns to the step of extracting the first pre-training text and image pair from the multiple pre-training text and image pairs. When the pre-training loss value is less than or equal to the second preset threshold, it is indicated that a small difference between the first predicted text and the first descriptive text from the first pre-training text and image pair until the second predetermined stopping condition is met to acquire the pre-trained model.

In some embodiments of the present disclosure, besides comparing the pre-training loss value with the second preset threshold, the number of iterations can further be considered to determine whether the current initial model has been fully trained.

In some embodiments, when the pre-training loss value is greater than the second preset threshold, the model parameters of the initial model are adjusted, and the process returns to the step of extracting the first pre-training text and image pair from the multiple pre-training text and image pairs, continuing to train the initial model. The training of the initial model stops in response to reaching the second preset number of iterations to obtain the trained pre-trained model. The specific number of the second preset iterations is chosen based on actual circumstances, with no restrictions imposed by some embodiments of the present disclosure.

In practical applications, there are many functions for calculating the pre-training loss value, such as cross-entropy loss function, L1 norm loss function, maximum loss function, mean squared error loss function, log loss function, etc., which are specifically chosen based on actual circumstances, with no restrictions imposed by some embodiments of the present disclosure.

Through applying the solution of some embodiments of the present disclosure, the first pre-training image from the first pre-training text and image pair is input into the initial model to acquire the first predicted text for the first pre-training image. The first predicted text is compared with the first descriptive text from the first pre-training text and image pair to calculate the pre-training loss value. The model parameters of the initial model are adjusted based on the pre-training loss value, and the process returns to the step of extracting the first pre-training text and image pair from the multiple pre-training text and image pairs. In response to meeting the second preset stopping condition, the pre-trained model is obtained. Continuously adjusting the model parameters of the initial model ensures that the final obtained pre-trained model is more precise.

In some embodiments, in order to better locate the text in the image for text and image recognition, the sample image carries sample position information of the sample Chinese text in the sample image. An operation of inputting the sample image and the preset prompt text into the pre-trained model to acquire the predicted Chinese text for the sample image includes the following steps. The sample image and the preset prompt text are input into the pre-trained model to acquire the predicted Chinese text and predicted position information for the sample image. An operation of training the pre-trained model based on the predicted Chinese text and the sample Chinese text to acquire the text and image recognition model includes the following steps. The pre-trained model is trained based on the predicted Chinese text, predicted position information, sample Chinese text and the sample position information to acquire the text and image recognition model.

In practical applications, an operation of training the pre-trained model based on the predicted Chinese text, the predicted position information, the sample Chinese text, and the sample position information to acquire the text and image recognition model includes the following steps. The predicted Chinese text is compared with the sample Chinese text to calculate the text loss value. The predicted position information is compared with the sample position information to calculate the position loss value. The model parameters of the pre-trained model are adjusted based on the text loss value and the position loss value, and return to the step of inputting the sample image and the preset prompt text into the pre-trained model to acquire the predicted Chinese text and the predicted position information for the sample image. In response to meeting the first preset stopping condition, the text and image recognition model is obtained. It should be noted that the specific implementation method of the embodiments is the same as the method shown in FIG. 3, so it will not be repeated here in some embodiments of the present disclosure.

It should be noted that when determining the Chinese text from the image to be recognized, the position information of the Chinese text is further determined from the image to be recognized. The position information is expressed in a Chinese text, to be fed back to the user together with the Chinese text. The position information can be described as central, top-left, top-right, etc., or the position information can be specific coordinates in the image to be recognized including the specific coordinates of top-left, bottom-left, top-right, and bottom-right corners of the Chinese text.

As shown in FIG.4, FIG.4 illustrates an interface schematic diagram of a text and image recognition interface according to some embodiments of the present disclosure. The text and image recognition interface includes an image upload box, a "Confirm" control, a "Cancel" control, and a recognition result display box. The user uploads an image to be recognized in the image upload box, such as a street view image including a shop name "Fried Chicken Shop". Through selecting the "Confirm" control, the client-side device inputs the image to be recognized and a preset prompt text "What is the text on the image?" into the text and image recognition model. After processing by the text and image recognition model, a recognition result is obtained and displayed in the recognition result display box with a result being "Fried Chicken Shop, located at the center of the image."

Through applying the solution described in the embodiments of the present disclosure, a sample set is acquired, where the sample set includes Chinese text and image pairs from multiple different scenarios. Each Chinese text and image pair includes a sample image and a sample Chinese text, and the sample image carries sample position information of the sample Chinese text from the sample image. The sample image and the preset prompt text are input into a pre-trained model to acquire a predicted Chinese text and predicted position information of the sample image. Based on the predicted Chinese text, the predicted position information, the sample Chinese text, and the sample position information, the pre-trained model is trained to acquire a text and image recognition model, so that the text and image recognition model can be enabled to predict the location of the sample Chinese text from the sample image, thereby improving the accuracy of the text and image recognition model.

In some embodiments, after the client-side device feeds back the sample Chinese text contained in the image to be recognized to the user, when the user finds that the sample Chinese text feedback by the client-side device is inaccurate, the user inputs a revised text corresponding to the sample Chinese text. For example, the revised text for the sample Chinese text "I hate happy" should be "I am happy". After receiving the revised text, the client-side device train the text and image recognition model based on the revised text and the image to be recognized to obtain an updated text and image recognition model. That is, after feeding back the sample Chinese text to the user, the method further includes the following steps. The revised text input by the user for the sample Chinese text is received. The text and image recognition model is trained based on the revised text and the image to be recognized to acquire an updated text and image recognition model.

It should be noted that the specific implementation of training the text and image recognition model based on the revised text and the image to be recognized to acquire the updated text and image recognition model is the same as the training process of the text and image recognition model shown in FIG.3, so it will not be repeated here.

Through applying the solution described in the embodiments of the present disclosure, through receiving the revised text input by the user for the sample Chinese text, training the text and image recognition model based on the revised text and the image to be recognized to acquire the updated text and image recognition model, optimization and adjustment of the text and image recognition model are achieved, thereby improving the accuracy of the text and image recognition model.

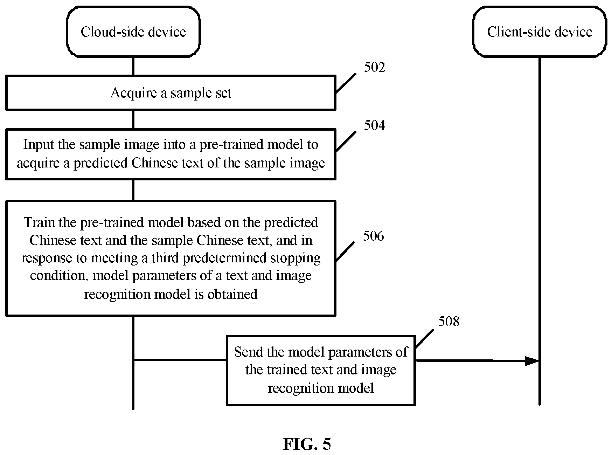

As shown in FIG.5, FIG.5 illustrates a flowchart of a data processing method for a text and image recognition model applied to a cloud-side device according to some embodiments of the present disclosure. The method includes the following steps. At step 502, the cloud-side device acquires a sample set.

The sample set includes Chinese text and image pairs from multiple different scenarios, and each Chinese text and image pair includes a sample image and a sample Chinese text.

Step 504: The cloud-side device inputs the sample image into a pre-trained model to acquire a predicted Chinese text of the sample image.

The pre-trained model is pre-trained based on multiple pre-training images and description texts corresponding to the multiple pre-training images.

Step 506: The cloud-side device trains the pre-trained model based on the predicted Chinese text and the sample Chinese text, and in response to meeting a third predetermined stopping condition, model parameters of a text and image recognition model is obtained.

Step 508: The cloud-side device sends the model parameters of the trained text and image recognition model to the client-side device.

In practical applications, there are various ways for the cloud-side device to acquire the sample set, which are chosen according to actual circumstances. In some embodiments, the cloud-side device acquires the sample set including the Chinese text and image pairs from multiple different scenarios from a cloud database. In some embodiments, the cloud-side device receives the sample set constructed and uploaded by the client-side device.

It should be noted that the specific implementations of Steps 502, 504, and 506 are the same as the training process of the text and image recognition model shown in FIG.3, which will not be repeated here. The third preset stop condition includes a third preset threshold and a third preset number of iterations, both the third preset threshold and the third preset number of iterations can be selected based on actual conditions.

In some embodiments, after the cloud-side device obtains model parameters of the text and image recognition model, the cloud-side device sends the model parameters to multiple client-side devices connected with the cloud-side device, allowing the client-side device to use the text and image recognition model for text and image recognition.

Through applying the solution described in the embodiments of the present disclosure, the cloud-side device acquires the sample set, where the sample set includes the Chinese text and image pairs from multiple different scenarios, each Chinese text and image pair includes the sample image and the sample Chinese text. The cloud-side device inputs the sample image into the pre-trained model to acquire the predicted Chinese text of the sample image, where the pre-trained model is pre-trained based on multiple pre-training images and description texts corresponding to the pre-training images. The cloud-side device trains the pre-trained model based on the predicted Chinese text and the sample Chinese text until the third preset stop condition is met to acquire the model parameters of the trained text and image recognition model. The cloud-side device sends the model parameters of the trained text and image recognition model to the client-side device. Since the pre-trained model is pre-trained based on multiple pre-training images and description texts corresponding to the pre-training images, the pre-trained model has the capability to describe images, and using Chinese text and image pairs from multiple different scenarios to train the pre-trained model improves the efficiency and accuracy of model training, thus enabling the text and image recognition model to have the capability to recognize Chinese text in images.

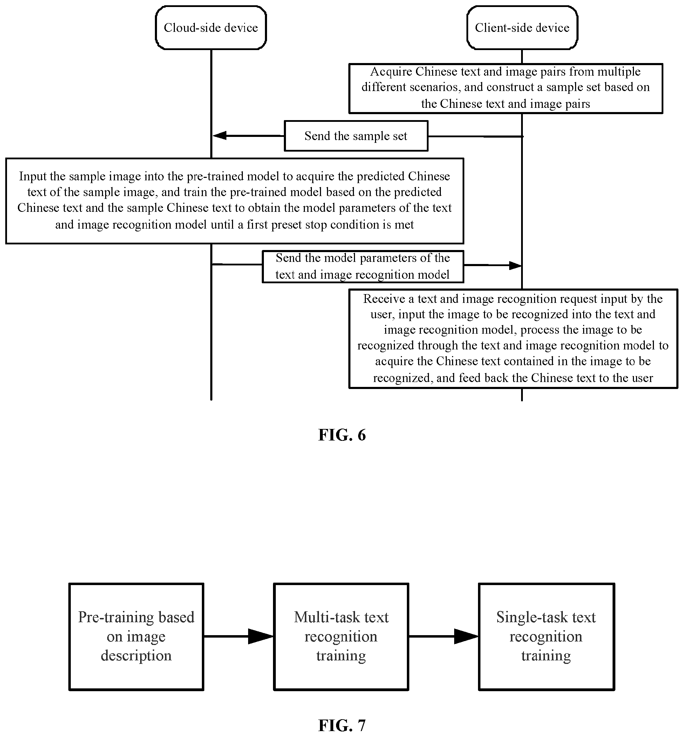

A further explanation of the method for the text and image recognition provided by present disclosure is provided in combination with FIG.6, taking the application of this method in Chinese text and image recognition as an example. FIG.6 shows a flowchart of a text and image recognition method according to some embodiments of the present disclosure, and the method includes the following steps. The client-side device acquires Chinese text and image pairs from multiple different scenarios, constructs a sample set based on the Chinese text and image pairs, and sends the sample set to the cloud-side device. Each Chinese text and image pair includes a sample image and a sample Chinese text, and the Chinese text and image pairs from multiple different scenarios include street scene Chinese text and image pairs, internet image Chinese text and image pairs, document Chinese text and image pairs, and handwritten Chinese text and image pairs.

The cloud-side device inputs the sample image into the pre-trained model to acquire the predicted Chinese text of the sample image, trains the pre-trained model based on the predicted Chinese text and the sample Chinese text to obtain the model parameters of the text and image recognition model until a first preset stop condition is met, and sends the model parameters of the text and image recognition model to the client-side device. The pre-trained model is pre-trained based on multiple pre-training images and description texts corresponding to the pre-training images.

The client-side device receives a text and image recognition request input by the user, inputs the image to be recognized into the text and image recognition model, processes the image to be recognized through the text and image recognition model to acquire the Chinese text contained in the image to be recognized, and feeds back the Chinese text to the user. The text and image recognition request includes the image to be recognized.

It should be noted that after receiving the model parameters of the text and image recognition model sent by the cloud-side device, the client-side device constructs the text and image recognition model based on the model parameters.

Through applying the solution described in the embodiments of the present disclosure, since the pre-trained model is pre-trained based on multiple pre-training images and description texts corresponding to the pre-training images, the pre-trained model has the capability to describe images, and using Chinese text and image pairs from multiple different scenarios to train the pre-trained model improves the efficiency and accuracy of model training, thus enabling the text and image recognition model to have the capability to recognize Chinese text in images, enhancing the efficiency and accuracy of text and image recognition.

As shown in FIG.7, FIG.7 illustrates a flowchart of a data processing for a text and image recognition model according to some embodiments of the present disclosure, which includes the following steps. Pre-training based on image description is provided. In a data processing method for the text and image recognition model according to the embodiments of the present disclosure, a complex text recognition task is converted into a sequence-to-sequence generation task from image to text. To enhance text generation and image understanding capabilities of the initial model, pre-training is performed on the initial model using large-scale data. In some embodiments, a training set is acquired, where the training set includes multiple pre-training text and image pairs, each pre-training text and image pair includes a pre-training image and a description text corresponding to the pre-training image, and weakly supervised data of Chinese text and image pairs is constructed based on the training set. Since a Transformer model takes both images and texts as input and output texts, the weakly supervised data can be fed into the Transformer model for pre-training, enabling the Transformer model to gain the ability to generate texts from images, laying the foundation for subsequent text and image recognition. In some embodiments, a loss function used during pre-training is a cross-entropy loss function, and the number of iterations reaches more than five rounds, ensuring sufficient pre-training and giving the model strong text generation capabilities.

Multi-task text and image recognition training is provided. A sample set is acquired, where the sample set includes Chinese text and image pairs from multiple different scenarios, each Chinese text and image pair includes a sample image and a sample Chinese text. Subsequently, multi-task training is conducted on the basis of the pre-trained model. Multi-task refers to text and image recognition tasks of Chinese text and image pairs from different scenarios. The model parameters are initialized using weights obtained from the aforementioned pre-training, allowing the model to start training from a pre-trained model with image description capabilities rather than a randomly initialized model. During multi-task training, the text and image recognition tasks of different scenarios are unified into a consistent task format, and the data is shuffled and mixed for multi-task training. After completing multi-task model training, a text and image recognition model is obtained. Further, the text and image recognition model can be directly evaluated on multiple downstream tasks. Shuffling and mixing the data means dividing the data into many batches to ensure the diversity of the data, such as dividing one million data entries into many batches and each batch contains 128 data entries.

Single-task text and image recognition training is provided. After acquiring the text and image recognition model, further fine-tuning can be conducted on specific scenarios to achieve better performance, with the training approach remaining consistent with multi-task training but using Chinese text and image pairs from the specified scenario. Compared with single-task fine-tuning, multi-task and single-task training can effectively enhance the generalization of the model and prevent over fitting.

It should be noted that the embodiments of the present disclosure provide a multi-modal pre-training-driven multi-task and single-task dual-stage text and image recognition scheme a multi-modal generative text and image recognition model. The embodiments of the present disclosure greatly simplifies the model architecture, converting complex text recognition tasks into image-based text description models. To enhance image description capabilities of the model and provide a great foundation for subsequent text recognition, the embodiments of the present disclosure first widely collect a large amount of text and image weakly supervised data from the Chinese Internet for pre-training based on image description. Based on this, the embodiments of the present disclosure design a multi-task and single-task text recognition training method, unifying multi-scenario text recognition training to produce a multi-task model, followed by downstream task fine-tuning for text recognition in specific scenarios.

As shown in Table 1, Table 1 is a comparison table of model recognition capabilities. Table 1 shows the comparison of recognition capabilities between the text and image recognition model trained according to the embodiments of the present disclosure and other models in the scenarios of street scenes, internet images, documents, and handwriting. Other models include spatial auto-regressive models, transformation recognition models, basic models trained on OCR data, and large-scale models trained on OCR data. The model recognition capability comparison table shown in Table 1 is as follows.

| Model | Street View | Web Image | Document | Handwriting | Average |
|---|---|---|---|---|---|
| Spatial Autoregressive Model | 62.5 | 54.3 | 93.8 | 31.4 | 67.3 |
| Transformation Recognition Model | 63.3 | 62.3 | 96.9 | 53.4 | 72.8 |
| Basic Model Trained on OCR Data | 73.9 | 74.8 | 99.3 | 63.7 | 80.8 |
| Large-Scale Model Trained on OCR Data | 76.2 | 76.8 | 99.4 | 67.9 | 82.8 |
| Multi-Task Training-Based Text and Image Recognition Model | 80.8 | 79.8 | 98.7 | 65.5 | 84.3 |
| Text and Image Recognition Model Based on Multi-Task + Single-Task Training | 82.9 | 81.7 | 99.1 | 69.0 | 86.0 |

From the above Table 1, it can be seen that the text and image recognition model trained in the embodiments of the present disclosure has an absolute value higher by 6.5 in street view performance, 4.9 higher in web image scenarios, and 3.2 higher on average, significantly improving the model effectiveness. When calculating the average, the amount of data in the sample set is required to be taken into account.

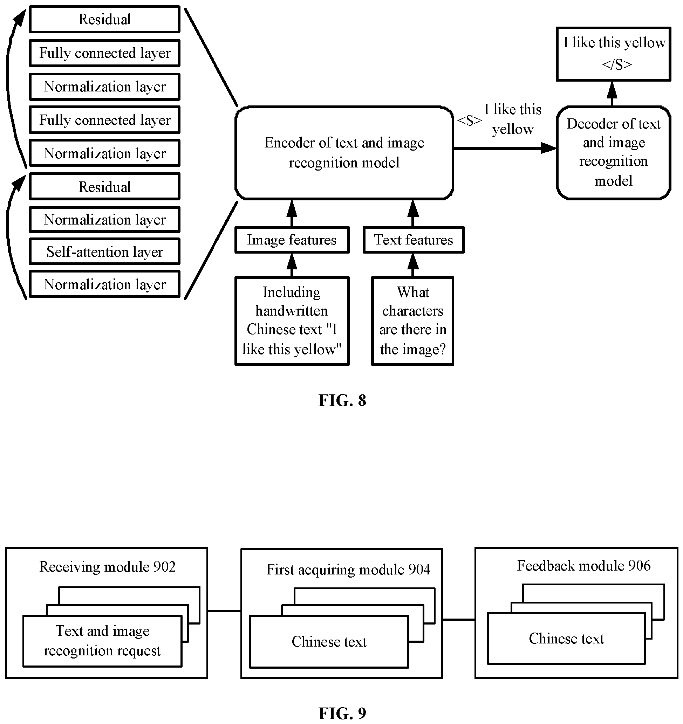

As shown in FIG.8, FIG.8 shows a flowchart of a processing for a text and image recognition method according to some embodiments of present disclosure, which includes the following steps. An image to be recognized containing handwritten Chinese text "I like this dusk" is acquired. Image features are extracted from the image to be recognized and text features are extracted from the preset prompt text "What is the text on the image". The image features and text features are input into the encoder of the text and image recognition model to acquire the encoding representation "<S>I like this dusk," and the encoding representation is input into the decoder of the text and image recognition model to generate the text and image recognition result "I like this dusk</S>". <S> is a start symbol, and </S> is an end symbol.

In some embodiments, a visual interface is used for extracting image features from the image to be recognized. The visual interface converts the image to be recognized into a low-dimensional feature map, and further converts the low-dimensional feature map into the image features. These image features are combined with text features transformed through a text embedding layer and input into the encoder of the text and image recognition model. The visual interface selects different basic visual models according to the scale of different models. In some embodiments, a base-scale model with 180 million parameters uses the first three layers of parameters from ResNet-101, while a large-scale model with 470 million parameters uses the first nine layers of parameters from the VIT model. The base model includes 6 encoder layers and 6 decoder layers, while the large-scale model includes 12 encoder layers and 12 decoder layers.

It should be noted that the encoder of the text and image recognition model contains multiple Transformer layers, each of the multiple Transformer layers includes a Headscale Multi-Head Attention (MHA) layer and a Fully Connected (FC) Layer. To enhance training stability, Layer Norms (LN) are added before and after the Headscale MHA layer, before the FC Layer and after a first FC layer, and Residual connections are also added both before and after the Headscale MHA layer and the FC layer. The query, key, and value of the self-attention layer are linear transformations of the input representation of the current layer. The query of the cross-attention layer is a linear transformation of the input representation of the current layer, while the key and value are linear transformations of the output of the encoder. During the training phase, the decoder is trained using teacher forcing, while during the testing phase, a beam search method is adopted.

Corresponding to the above embodiments of the method for text and image recognition, some embodiments of the present disclosure further provides an apparatus for text and image recognition. FIG.9 is a structural schematic diagram of an apparatus for text and image recognition according to some embodiments of present disclosure. As shown in FIG.9, the apparatus is applied to a terminal-side device. The apparatus includes: a receiving module 902, arranged for receiving a text and image recognition request input by a user, where the text and image recognition request includes an image to be recognized; a first acquisition module 904, arranged for inputting the image to be recognized into a text and image recognition model to acquire, after processing the image to be recognized by the text and image recognition model, Chinese text from the image to be recognized, where the text and image recognition model is obtained by training a pre-trained model based on Chinese text and image pairs from multiple different scenes, and the pre-trained model is pre-trained based on multiple pre-training images and description texts respectively corresponding to each of the multiple pre-training images; and a feedback module 906 arranged for providing feedback to the user with the Chinese text.

**In** some embodiments, the apparatus further includes: a training module for the text and image recognition model, arranged for acquiring a sample set, where the sample set includes Chinese text and image pairs from the multiple different scenes, and each Chinese text and image pair includes a sample image and a sample Chinese text; inputting the sample image into the pre-trained model to acquire a predicted Chinese text for the sample image; and training the pre-trained model based on the predicted Chinese text and the sample Chinese text to acquire the text and image recognition model.

**In** some embodiments, the Chinese text and image pairs from multiple different scenes include Chinese text and image pairs from street views, Chinese text and image pairs from web images, Chinese text and image pairs from documents, and Chinese text and image pairs from handwriting.

**In** some embodiments, the apparatus further includes: a designated scene training module, arranged for receiving a training instruction sent by the user, where the training instruction includes a designated scene; acquiring multiple Chinese text and image pairs from the designated scene; and training the text and image recognition model using the multiple Chinese text and image pairs from the designated scene to acquire a text and image recognition model for the designated scene.

In some embodiments, the apparatus further includes: a processing module, arranged for acquiring size data of the sample image; determining an aspect ratio of the sample image based on the size data; and processing the sample image based on the aspect ratio to acquire a processed sample image.

In some embodiments, the processing module is further arranged for converting a length of the sample image based on a predetermined resolution to determine a converted length of the sample image; adjusting a width of the sample image based on the aspect ratio and the converted length to determine a converted width of the sample image; and filling pixel values of the sample image based on the converted length and the converted width to acquire the processed sample image.

In some embodiments, the training module for the text and image recognition model is further arranged for comparing the predicted Chinese text with the sample Chinese text to calculate a text loss value; and adjusting model parameters of the pre-trained model based on the text loss value, and returning to a step of inputting the sample image into the pre-trained model to acquire the predicted Chinese text for the sample image until a first predetermined stopping condition is met to acquire the text and image recognition model.

In some embodiments, the training module for the text and image recognition model is further arranged for extracting image features from a first sample image, where the first sample image is any image from the Chinese text and image pairs; and inputting the image features into the pre-trained model to acquire a first predicted Chinese text for the first sample image.

In some embodiments, the apparatus further includes a pre-training module, arranged for acquiring a training set, where the training set includes multiple pre-training text and image pairs, and each pre-training text and image pair includes a pre-training image and a description text corresponding to the pre-training image; extracting a first pre-training text and image pair from the multiple pre-training text and image pairs, where the first pre-training text and image pair is any one of the multiple pre-training text and image pairs; inputting a first pre-training image from the first pre-training text and image pair into an initial model to acquire a first predicted text for the first pre-training image; comparing a first predicted text with the first description text from the first pre-training text and image pair to calculate a pre-training loss value; and adjusting model parameters of the initial model based on the pre-training loss value, and returning to a step of extracting the first pre-training text and image pair from the multiple pre-training text and image pairs until a second predetermined stopping condition is met to acquire the pre-trained model.

In some embodiments, the sample image carries sample position information of the Chinese text within the sample image; the training module for the text and image recognition model is further arranged for inputting the sample image into the pre-trained model to acquire the predicted Chinese text and predicted position information for the sample image; and training the pre-trained model based on the predicted Chinese text, the predicted position information, the sample Chinese text, and sample position information to acquire the text and image recognition model.

In some embodiments, the apparatus further includes: a training update module, arranged for receiving revised text corresponding to the Chinese text input by the user; and training the text and image recognition model based on the revised text and the image to be recognized to acquire an updated text and image recognition model.

Through applying the solution of the embodiments of the present disclosure, the text and image recognition request including the image to be recognized is received from the user, the image to be recognized is input into the text and image recognition model to acquire the Chinese text from the image to be recognized, where the text and image recognition model is obtained by training the pre-trained model based on the Chinese text and image pairs from multiple different scenes, and the pre-trained model is pre-trained based on multiple pre-training images and description texts corresponding to the multiple pre-training images; and feedback is provided to the user with the sample Chinese text. Since the pre-trained model is pre-trained based on multiple pre-training images and description texts corresponding to the multiple pre-training images, the pre-trained model possesses the capability of image description. Through training the pre-trained model using the Chinese text and image pairs from the multiple different scenes, the text and image recognition model can acquire the ability to recognize the Chinese text from the image, thereby enhancing the efficiency and accuracy of text and image recognition.

The above describes an illustrative solution of the apparatus for text and image recognition according to some embodiments. It should be noted that the technical solution of the apparatus for text and image recognition is based on the same concept as the technical solution of the method for text and image recognition. Any details not explicitly described in the technical solution of the apparatus for text and image recognition can refer to the description of the technical solution of the method for text and image recognition.

Corresponding to the above embodiments of the data processing method for the text and image recognition model, some embodiments of the present disclosure further provides a data processing apparatus for the text and image recognition model.

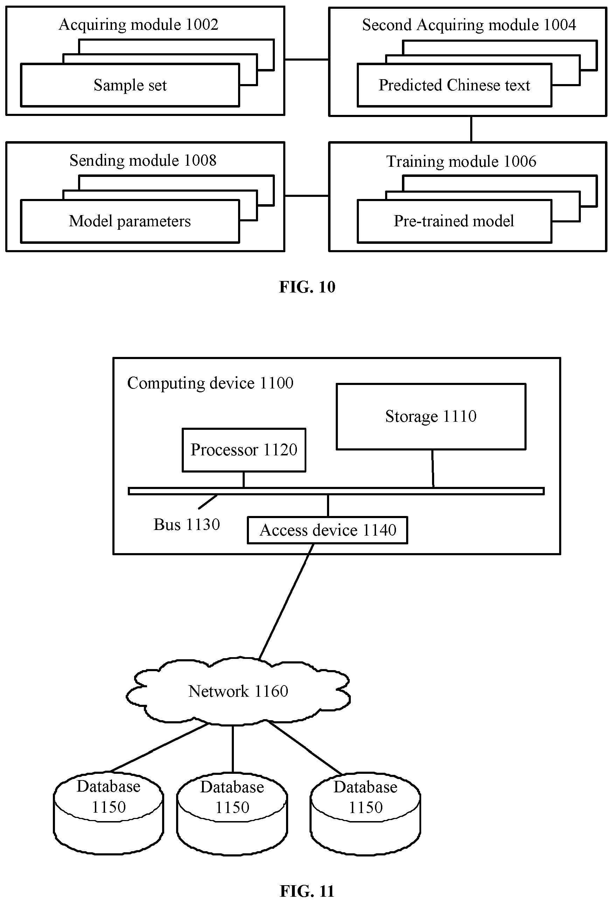

FIG. 10 is a structural schematic diagram of a data processing apparatus for the text and image recognition model according to some embodiments of present disclosure. As shown in FIG. 10, the apparatus is applied to a cloud-side device and the apparatus includes: an acquisition module 1002, arranged for acquiring a sample set, where the sample set includes Chinese text and image pairs from multiple different scenes, and each of the multiple Chinese text and image pair includes a sample image and a sample Chinese text; a second acquisition module 1004, arranged for inputting the sample image into a pre-trained model to acquire a predicted Chinese text for the sample image, where the pre-trained model is pre-trained based on multiple pre-training images and description texts corresponding to the multiple pre-training images; a training module 1006, arranged for training the pre-trained model based on the predicted Chinese text and the sample Chinese text, and in response to meeting a third predetermined stopping condition, acquiring model parameters of a text and image recognition model; and a sending module 1008, arranged for sending the model parameters of the text and image recognition model to the client-side device.

Through applying the solution described in the embodiments of the present disclosure, the cloud-side device acquires the sample set, where the sample set includes the Chinese text and image pairs from multiple different scenarios, each Chinese text and image pair includes the sample image and the sample Chinese text. The cloud-side device inputs the sample image into the pre-trained model to acquire the predicted Chinese text of the sample image, where the pre-trained model is pre-trained based on multiple pre-training images and description texts corresponding to the pre-training images. The cloud-side device trains the pre-trained model based on the predicted Chinese text and the sample Chinese text until the third preset stop condition is met to acquire the model parameters of the trained text and image recognition model. The cloud-side device sends the model parameters of the trained text and image recognition model to the client-side device. Since the pre-trained model is pre-trained based on multiple pre-training images and description texts corresponding to the pre-training images, the pre-trained model has the capability to describe images, and using Chinese text and image pairs from multiple different scenarios to train the pre-trained model improves the efficiency and accuracy of model training, thus enabling the text and image recognition model to have the capability to recognize Chinese text in images.

The above describes an illustrative solution of a data processing apparatus for the text and image recognition model according to some embodiments of the present disclosure. It should be noted that the technical solution of the data processing apparatus for the text and image recognition model is based on the same concept as the technical solution of the data processing method for the text and image recognition model. Any details not explicitly described in the technical solution of the data processing apparatus for the text and image recognition model can refer to the description of the technical solution of the data processing method for the text and image recognition model.

FIG.11 illustrates a structural block diagram of a computing device according to some embodiments of present disclosure. The components of the computing device 1100 include, but are not limited to, a memory 1110 and a processor 1120. The processor 1120 is connected with memory 1110 via bus 1130, and a database 1150 is used for storing data.

The computing device 1100 further includes an interface device 1140, which allows the computing device 1100 to communicate via at least one network 1160. Examples of such networks include Public Switched Telephone Network (PSTN), Local Area Network (LAN), Wide Area Network (WAN), Personal Area Network (PAN), or combinations thereof such as the Internet. The interface device 1140 includes at least one type of wired or wireless network interfaces, such as IEEE802.11 Wireless Local Area Network (WLAN) wireless interface, Worldwide Interoperability for Microwave Access (Wi-MAX) interface, Ethernet interface, Universal Serial Bus (USB) interface, cellular network interface, Bluetooth interface, Near Field Communication (NFC) interface, etc.

In some embodiments of the present disclosure, the aforementioned components of the computing device 1100 and other components not shown in FIG. 11 can also be interconnected with each other, for example, through a bus. It should be understood that the structural block diagram of the computing device shown in FIG. 11 is for illustrative purposes and does not limit the scope of the present disclosure. Those skilled in the art can add or replace other components as needed.

The computing device 1100 is any type of stationary or mobile computing device, including a mobile computer or a mobile computing devices (e.g., a tablet computer, a personal digital assistant, a laptop, a notebook computer, a netbook, etc.), a mobile phone (e.g., a smartphone), a wearable computing device (e.g., a smart watch, smart glasses, etc.), or other types of mobile devices, or a stationary computing device such as a desktop computer or a Personal Computer (PC). The computing device 1100 is also a mobile or stationary server.

The processor 1120 is used for executing the computer-executable instructions, and the computer-executable instructions, when executed by the processor, implement the steps of the data processing method for the text and image recognition model or the method for the text and image recognition.

The above describes an illustrative solution of the computing device according to some embodiments of the present disclosure. It should be noted that the technical solution of the computing device is based on the same concept as the technical solution of the data processing method for the text and image recognition model and the method for the text and image recognition. Any details not explicitly described in the technical solution of the computing device can refer to the description of the data processing method for the text and image recognition model or the method for the text and image recognition.

Some embodiments of the present disclosure further provides a computer-readable storage medium storing computer-executable instructions, where the computer-executable instructions, when executed by a processor, implement the steps of the data processing method for the text and image recognition model or the method for the text and image recognition.

The above describes an illustrative solution of the computing device according to some embodiments of the present disclosure. It should be noted that the technical solution of the computing device is based on the same concept as the technical solution of the data processing method for the text and image recognition model and the method for the text and image recognition. Any details not explicitly described in the technical solution of the computing device can refer to the description of the data processing method for the text and image recognition model or the method for the text and image recognition.

Some embodiments of the present disclosure further provide a computer program. When the computer program is executed by a computer, the computer executes the steps of the data processing method for the text and image recognition model or the method for the text and image recognition.

The above describes an illustrative solution of the computer program according to some embodiments of the present disclosure. It should be noted that the technical solution of the computer program is based on the same concept as the technical solution of the data processing method for the text and image recognition model and the method for the text and image recognition. Any details not explicitly described in the technical solution of the computer program can refer to the description of the data processing method for the text and image recognition model or the method for the text and image recognition.

The above describes specific embodiments of the present disclosure. Other embodiments are within the scope of the appended claims. In some cases, the actions or steps recorded in the claims can be executed in a different order than in some embodiments and still achieve the desired result. Additionally, the processes depicted in the accompanying drawings do not necessarily require a specific order or continuous sequence to achieve the desired result. In some implementations, multitasking and parallel processing may also be possible or advantageous.

The computer instructions include computer program code, which can be in the form of source code, object code, executable files, or some intermediate form. The computer-readable medium includes: any entity or apparatus capable of carrying the computer program code, recording medium, Universal Serial Bus (USB) flash drive, external hard drive, magnetic disk, optical disk, computer memory, Read-Only Memory (ROM), Random Access Memory (RAM), electronic carrier signals, telecommunications signals and software distribution media, etc.

It should be noted that, for the sake of simplicity in description, the aforementioned method embodiments are all expressed as a series of action combinations. However, those skilled in the art should be aware that the embodiments of the present disclosure are not limited to the order of actions described, as some steps can be performed in other orders or simultaneously according to the embodiments of the present disclosure. Furthermore, those skilled in the art should also be aware that the embodiments described in the specification are optional embodiments, and the actions and modules involved are not necessarily required for the embodiments of the present disclosure.

In the above embodiments, each embodiment is described with its own focus. Parts not detailed in a certain embodiment can refer to the relevant descriptions in other embodiments.

The exemplary embodiments of the present disclosure disclosed above are used for helping illustrate the present disclosure. The optional embodiments do not describe all the details exhaustively, nor do the optional embodiments limit the present disclosure to the specific implementations described. Obviously, many modifications and variations can be made based on the content of the embodiments of the present disclosure. The present disclosure can select and specifically describe these embodiments in order to better explain the principles and practical applications of the embodiments of the present disclosure, thereby enabling those skilled in the art to understand and utilize the present disclosure well. The present disclosure is limited by the claims and the entire scope and equivalents of the claims.

## Claims

1. A method for text and image recognition, applied to a client-side device, the method comprising:
receiving a text and image recognition request input by a user, wherein the text and image recognition request comprises an image to be recognized;
inputting the image to be recognized into a text and image recognition model to acquire,
after processing the image to be recognized by the text and image recognition model,
Chinese text from the image to be recognized, wherein the text and image recognition model is obtained by training a pre-trained model based on Chinese text and image pairs from a plurality of different scenes, and the pre-trained model is pre-trained based on a plurality of pre-training images and description texts respectively corresponding to each of the plurality of pre-training images; and
providing feedback to the user with the Chinese text.

2. The method as claimed in claim 1, a training process for the text and image recognition model comprising:
acquiring a sample set, wherein the sample set comprises Chinese text and image pairs from the plurality of different scenes, and each Chinese text and image pair comprises a sample image and a sample Chinese text;
inputting the sample image into the pre-trained model to acquire a predicted Chinese text for the sample image; and
training the pre-trained model based on the predicted Chinese text and the sample Chinese text to acquire the text and image recognition model.

3. The method as claimed in claim 2, the Chinese text and image pairs from the plurality of different scenes comprise Chinese text and image pairs from street views, Chinese text and image pairs from web images, Chinese text and image pairs from documents, and Chinese text and image pairs from handwriting.

4. The method as claimed in claim 2, after training the pre-trained model based on the predicted Chinese text and the sample Chinese text to acquire the text and image recognition model, further comprising:
receiving a training instruction sent by the user, wherein the training instruction comprises a designated scene;
acquiring a plurality of Chinese text and image pairs from the designated scene; and
training the text and image recognition model using the plurality of Chinese text and image pairs from the designated scene to acquire a text and image recognition model for the designated scene.

5. The method as claimed in claim 2, after acquiring the sample set, further comprising:
acquiring size data of the sample image;
determining an aspect ratio of the sample image based on the size data; and
processing the sample image based on the aspect ratio to acquire a processed sample image.

6. The method as claimed in claim 5, processing the sample image based on the aspect ratio to acquire the processed sample image comprising:
converting a length of the sample image based on a predetermined resolution to determine a converted length of the sample image;
adjusting a width of the sample image based on the aspect ratio and the converted length to determine a converted width of the sample image; and
filling pixel values of the sample image based on the converted length and the converted width to acquire the processed sample image.

7. The method as claimed in claim 2 or 5 or 6, training the pre-trained model based on the predicted Chinese text and the sample Chinese text to acquire the text and image recognition model comprising:
comparing the predicted Chinese text with the sample Chinese text to calculate a text loss value; and
adjusting model parameters of the pre-trained model based on the text loss value, and
returning to a step of inputting the sample image into the pre-trained model to acquire the predicted Chinese text for the sample image until a first predetermined stopping condition is met to acquire the text and image recognition model.

8. The method as claimed in claim 2 or 5 or 6, inputting the sample image into the pre-trained model to acquire the predicted Chinese text for the sample image comprising:
extracting image features from a first sample image, wherein the first sample image is any image from the Chinese text and image pairs; and
inputting the image features into the pre-trained model to acquire a first predicted Chinese text for the first sample image.

9. The method as claimed in claim 1, a training process for the pre-trained model comprising:
acquiring a training set, wherein the training set comprises a plurality of pre-training text and image pairs, and each pre-training text and image pair comprises a pre-training image and a description text corresponding to the pre-training image;
extracting a first pre-training text and image pair from the plurality of pre-training text and
image pairs, where the first pre-training text and image pair is any one of the plurality of pre-training text and image pairs;
inputting a first pre-training image from the first pre-training text and image pair into an initial model to acquire a first predicted text for the first pre-training image;
comparing a first predicted text with the first description text from the first pre-training text and image pair to calculate a pre-training loss value; and
adjusting model parameters of the initial model based on the pre-training loss value, and
returning to a step of extracting the first pre-training text and image pair from the plurality of pre-training text and image pairs until a second predetermined stopping condition is met to acquire the pre-trained model.

10. The method as claimed in claim 2, the sample image carries sample position information of the Chinese text within the sample image, inputting the sample image into the pre-trained model to acquire the predicted Chinese text for the sample image comprising:
inputting the sample image into the pre-trained model to acquire the predicted Chinese text and predicted position information for the sample image; and
training the pre-trained model based on the predicted Chinese text and the sample Chinese text to acquire the text and image recognition model comprising:
training the pre-trained model based on the predicted Chinese text, the predicted position information, the sample Chinese text, and sample position information to acquire the text and image recognition model.

11. The method as claimed in claim 1, after providing feedback to the user with the Chinese text, further comprising:
receiving revised text corresponding to the Chinese text input by the user; and
training the text and image recognition model based on the revised text and the image to be recognized to acquire an updated text and image recognition model.

12. A data processing method for a text and image recognition model, applied to a cloud-side device, the method comprising:
acquiring a sample set, wherein the sample set comprises Chinese text and image pairs from a plurality of different scenes, and each of the plurality of Chinese text and image pair comprises a sample image and a sample Chinese text;
inputting the sample image into a pre-trained model to acquire a predicted Chinese text for the sample image, wherein the pre-trained model is pre-trained based on a plurality of pre-training images and description texts corresponding to the plurality of pre-training images;
training the pre-trained model based on the predicted Chinese text and the sample Chinese text, and in response to meeting a third predetermined stopping condition, acquiring model parameters of a text and image recognition model;
sending the model parameters of the text and image recognition model to the client-side device.

13. A computing device, comprising:
a memory and a processor;
the memory is arranged for storing computer-executable instructions, and the processor is arranged for executing the computer-executable instructions, wherein the computer-executable instructions, when executed by the processor, implement the steps of the method as claimed in any one of claims 1 to 11 or claim 12.

14. A computer-readable storage medium, storing computer-executable instructions, wherein the computer-executable instructions, when executed by a processor, implement the steps of the method as claimed in any one of claims 1 to 11 or claim 12.
